# EUROPÄISCHE PATENTSCHRIFT

(11) **EP 1 089 072 B1**
(45) Veröffentlichungstag und Bekanntmachung des Hinweises auf die Patenterteilung: **16.02.2005**
(21) Anmeldenummer: 00119155.0
(22) Anmeldetag: 05.09.2000
(51) Int. Cl.: G01N 27/07

(54) **Leitfähigkeitssensor**
Conductivity sensor
Capteur de conductivité

(30) Priorität: 28.09.1999 DE 19946315
(43) Veröffentlichungstag der Anmeldung: 04.04.2001
(73) Patentinhaber: PharmaSerV Marburg GmbH & Co. KG, 35041 Marburg (DE)
(72) Erfinder: Lenz, Jörg, 35282 Rauschenberg (DE)
(74) Vertreter: KEIL & SCHAAFHAUSEN

(56) Entgegenhaltungen:
- EP-A- 0 386 660
- US-A- 3 601 693
- US-A- 4 015 199
- US-A- 4 118 663
- US-A- 4 227 151
- US-A- 5 025 219

## Beschreibung

Die Erfindung bezieht sich auf einen Leitfähigkeitssensor.

Bei bekannten Leitfähigkeitssensoren besteht das Problem, dass sie in die Reaktionsgefäße hineinragen und damit die insbesondere bei Arzneimitteln kritische Reinigungsoperation behindern. Außerdem sind sie z. B. in einem Auftaukessel, welcher mit schwimmenden Eisbrocken gefüllt ist, wegen Beschädigungsgefahr nicht verwendbar. In faserhaltigen Medien setzen sich die bekannten Sensoren zu und können deshalb nicht oder nur mit besonderen Reinigungseinrichtungen verwendet werden, wodurch der technische Aufwand und damit die Kosten erheblich steigen. Bei Einsatz der bekannten Leitfähigkeitssensoren wird ferner die Strömung des Medienstroms, in den sie hineinragen, beeinträchtigt.

Die US 4 118 663 offenbart eine Elektrodenkonfiguration, bei welcher Stromelektroden und Spannungselektroden bildende Elektroden vorgesehen sind. Dabei sind eine Spannungselektrode und eine Stromelektrode von ringförmigen Elektroden umgeben, welche ebenfalls eine Stromelektrode und eine Spannungselektrode darstellen.

Die US 4 015 199 offenbart eine Elektrodenkonfiguration von vier Spannungselektroden und zwischen diesen zwei gesonderte Stromelektroden, welche alle kreisflächenförmig sind. Die Spannungselektroden und die Stromelektroden liegen jeweils auf gemeinsamen Geraden. Die Spannungselektroden sind auf der selben Potentiallinie seitlich der ebenfalls auf einer geraden Linie liegenden Stromelektrode angeordnet.

Die US 3 601 693 offenbart eine Messzelle, welche in eine Flüssigkeit eingetaucht wird, um deren Leitfähigkeit zu messen. Danach enthält bspw. eine Kammer einen Elektrolyten, wobei zwei flache Stromelektroden an den beiden Enden der Zelle angeordnet sind. Zwischen den plattenförmigen Stromelektroden sind stabförmige Spannungselektroden vorgesehen, deren Längsrichtung senkrecht zu der Stromflussrichtung steht und gegen Stromfluss zwischen den plattenförmigen Stromelektroden durch gesonderte elektrische Isolierkörper abgeschirmt sind, welche jeweils als halbzylindrischer Schirm ausgebildet sind, weiche im Wesentlichen koaxial zu den stabförmigen Spannungselektroden liegen und eine Öffnung aufweisen, welche weg von der zugeordneten Stromelektrode gerichtet ist. Bei einem Leitfähigkeitssensor liegen kreisflächenförmige Spannungselektroden seitlich von vier kreisflächenförmigen Stromelektroden, welche sich jeweils paarweise auf einer Geraden befinden.

Die US 4 227 151 offenbart eine Zelle für die Messung und Überwachung der elektrischen Leitfähigkeit einer Flüssigkeit, welche wenigstens vier konzentrische kreisringförmige Elektroden aufweist, welche in einer flachen oder im Wesentlichen flachen Oberfläche angeordnet sind. Die konzentrischen Elektroden sind durch ringförmige Bereiche aus elektrisch nichtleitendem Material voneinander getrennt. Die zentrale innere Elektrode kann hohl sein, um einen Temperatursensor aufzunehmen.

Die EP 0 386 660 A1 betrifft einen Leitfähigkeits-Messwertaufnehmer, bei welcher in der Stirnfläche eines zylindrischen Trägerkörpers aus Isolierstoff vier konzentrische Metallringe als Elektroden angebracht sind, die plan mit der Stimfläche abschließen. Die mittlere Elektrode kann napfförmig ausgebildet sein und als Aufnahme für ein Widerstandsthermometer dienen.

Aufgabe der vorliegenden Erfindung ist es, einen Leitfähigkeitssensor vorzuschlagen, welcher bei geringem baulichen Aufwand die genannten Nachteile vermeidet, d.h. auch bei Reaktionsgefäßen im Arzneimittelbereich, also z.B. in mit CIP (Cleaning In Process) ausgestatteten Fermenten, einsetzbar ist, und dennoch eine zufriedenstellende Empfindlichkeit aufweist.

Diese Aufgabe wird bei einem Leitfähigkeitssensor mit den Merkmalen des Anspruchs 1 gelöst.

Erfindungsgemäß wird somit zur Lösung der gestellten Aufgabe eine völlig neue Messelektrodenanordnung vorgeschlagen. Es kann trotz kleiner Querschnittsabmessungen ein großer Messbereich von bis zu 850 mS abgedeckt werden, so dass ein Einsatz in den verschiedensten Anlagen möglich ist. Durch die plane Oberfläche der Stirnwandung lässt der erfindungsgemäße Leitfähigkeitssensor sich leicht reinigen und ist unempfindlich gegen Verschmutzung. Außerdem ist er mechanisch außerordentlich stabil. Die Verschaltung kann als Vierpol- bzw. Zweipol-Leitfähigkeitssensor erfolgen. Bei der Anordnung einzelner kreisflächenförmiger Stromelektroden in zwei Halbkreisen um die Spannungselektroden erfolgt eine Annäherung an zwei flächenförmige, im Wesentlichen in einem Halbkreis verlaufenden Stromelektroden umso dichter, je mehr Pole verwendet werden. Die Anzahl der Messelektroden kann auch verändert werden, um eine Anpassung an besondere Gegebenheiten zu erreichen. Bei der erfindungsgemäßen besonderen Anordnung der Elektroden kann die Messelektrodenfläche deutlich kleiner als bei herkömmlichen Leitfähigkeitssensoren sein. Die innen liegenden Spannungselektroden sind besser in das Messfeld eingebunden. Der erfindungsgemäße Leitfähigkeitssensor hat ferner keinen Strahlschatten und ist dadurch auch in Fermentern einsetzbar, welche mit CIP (Cleaning In Process) ausgestattet sind.

Bei einer besonderen Ausgestaltung der Erfindung sind die Anordnung und Zuordnung der Messelektroden nach Anspruch 2 getroffen.

Dabei liegen vorteilhafterweise die Spannungselektroden und die Stromelektroden wie in Anspruch 3 angegeben.

Die Ansprüche 4 und 5 beziehen sich auf weitere bevorzugte Ausführungsbeispiele des erfundenen Leitfähigkeitssensors.

Ein weiteres Erfindungsmerkmal besteht darin, dass ein Temperatursensor in einer der Messelektroden selbst eingebaut ist.

Wenn das Gehäuse aus einem isolierenden Kunststoff, wie Polyetheretherketon (PEEK), oder aus Glas besteht, sowie die Messelektroden aus Edelstahl, Tantal oder aus Hastelloy (einer unter dieser Marke bekannten Nickel-Molybdän-Eisen-Legierung) bestehen, ist der Leitfähigkeitssensor FDA-konform. Außerdem ist ein Einsatz bis zu 200°C möglich und seine chemische Widerstandsfähigkeit ist so gewährleistet, dass ein Einsatz in vielen Bereichen chemischer und physikalischer Belastungen möglich ist. Alle Materialien sind zudem bis mindestens 140°C autoklavierbar. Das Gehäuse kann ferner aufgrund seines geringen Durchmessers in einen 25 mm Stutzen passen, so dass ein Einsatz an vielen Fermentern ohne Umbauten erfolgen kann.

Bei einer geringen Einbaulänge von weniger als etwa 10 mm ist die Beschädigungsgefahr und die Störung des Medienstromes nur gering.

In der nachfolgenden Beschreibung werden Ausführungsbeispiele der Erfindung anhand der Zeichnung dargestellt.

Es zeigen:
- Fig. 1: schematisch in Seitenansicht einen die Erfindung aufweisenden Leitfähigkeitssensor, und
- Fig. 2a und 2b: zwei Varianten der erfindungsgemäß vorgesehenen Messelektroden-Anordnung.

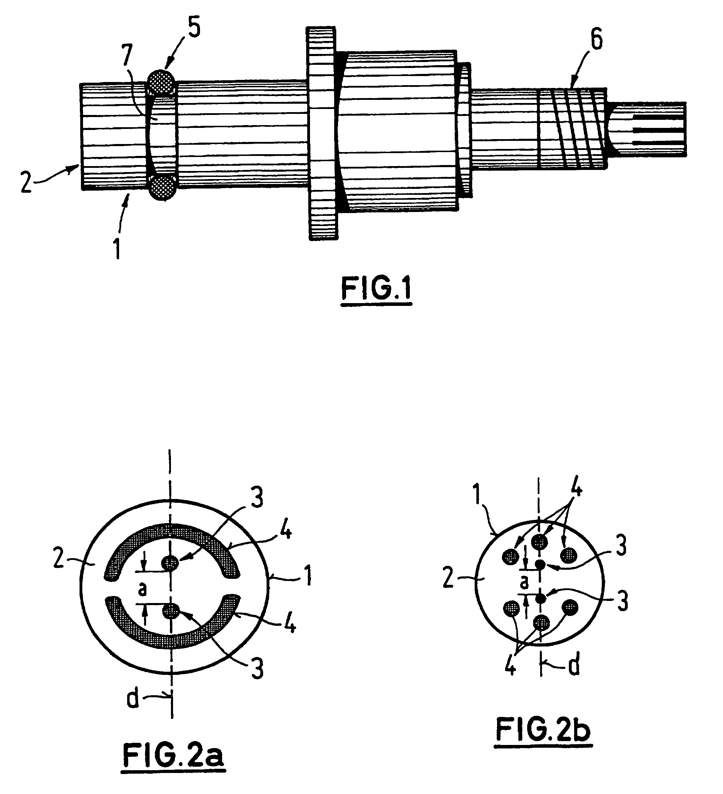

Der in Fig. 1 dargestellte Leitfähigkeitssensor weist ein Gehäuse 1 aus einem beständigen Isolator auf, welches eine etwa kreiszylindrische Umfangswandung und eine ebene Stirnwandung 2 hat. In einer Umfangsnut 7 des Gehäuses 1 ist ein Dichtungsring 5 aus Silikon oder dgl. Material aufgenommen. An das Gehäuse 1 schließt sich rückwärtig ein Anschlussstecker (VP-Stecker) 6 an, welcher leicht zu reinigen und unempfindlich gegen Feuchtigkeit ist.

Wie aus der Fig. 2a und 2b ersichtlich, befinden sich in der ebenen Stimwandung 2 je zwei flächenförmige Spannungselektroden 3 und Stromelektroden 4. Die beiden innen liegenden kreisflächenförmigen Spannungselektroden 3 haben einen lichten Abstand a voneinander, welcher - je nach Anwendung - zwischen 1 und 10mm beträgt. Die beiden halbkreisförmigen Stromelektroden 4 gemäß Fig. 2a, welche jeweils einer Spannungselektrode 3 zugeordnet sind, haben einen geringsten Abstand von den Spannungselektroden 3, welcher geringer ist als der lichte Abstand a der Spannungselektroden 3 voneinander. Der Abstand der halbkreisförmigen Stromelektroden 4 nach Fig. 2a von dem äußeren Rand der Stirnwandung 2 ist etwa gleich dem geringsten Abstand der Stromelektroden 4 von den Spannungselektroden 3.

Die Elektrodenanordnung gemäß Fig. 2b ist der von Fig. 2a insoweit ähnlich, als die halbkreisförmigen Stromelektroden 4 gemäß Fig. 2a durch einzelne kreisflächenförmige Stromelektroden 4 gemäß Fig. 2b ersetzt sind; letztere sind aber ebenfalls halbkreisförmig angeordnet, wobei in dem dargestellten Fall jeweils drei kreisflächenförmige Stromelektroden 4 einer Spannungselektrode 3, diese teilsweise umgebend, angeordnet sind.

Bei der Anordnung gemäß Fig. 2a liegen die Spannungselektroden auf einem Durchmesser d der Stimwandung 2 und die halbkreisförmigen Stromelektroden 4in sich spiegelsymmetrisch auf diesem gleichen Durchmesser d. Bei der Anordnung gemäß Fig. 2b liegen sowohl die Spannungselektroden 3 als auch zwei der kreisflächenförmigen Stromelektroden 4 auf ein und demselben Durchmesser d der Stirnwandung 2, während die jeweils beiden anderen kreisflächenförmigen Stromelektroden 4 spiegelsymmetrisch dazu liegen.

In eine der Messelektroden 3, 4 ist ein Temperatursensor (nicht dargestellt) eingebaut.

### Bezugszeichenliste

- 1: Gehäuse
- 2: Stirnwandung
- 3: Spannungselektroden
- 4: Stromelektroden
- 5: Dichtungsring
- 6: Anschlussstecker
- 7: Umfangsnut

- a: Abstand
- d: Durchmesser

## Patentansprüche

1. Leitfähigkeitssensor mit einem im Wesentlichen kreiszylindrischen Gehäuse (1) aus Kunststoff oder Glas, mit einer planen, im Wesentlichen kreisflächenförmigen Stirnwandung (2) und mit metallenen oder aus Kunstkohle bestehenden Messelektroden (3, 4) in der Stirnwandung (2), von welchen wenigstens zwei als Spannungselektroden (3) verschaltet und wenigstens zwei als Stromelektroden (4) verschaltet Pole bilden, wobei die Spannungselektroden (3) im Wesentlichen kreisflächenförmig sind und von zwei kreisringflächenförmigen, im Wesentlichen je in einem Halbkreis verlaufenden bzw. von wenigstens vier im Wesentlichen kreisflächenförmigen, in zwei Halbkreisen angeordneten Stromelektroden (4) umgeben sind.

2. Leitfähigkeitssensor nach Anspruch 1, **dadurch gekennzeichnet, dass** zwei der Spannungselektroden (3) in einem lichten Abstand (a) voneinander angeordnet sind, dass je einer der zwei Spannungselektroden (3) jeweils eine der Stromelektroden (4) zugeordnet ist und dass die Stromelektroden (4) die jeweils zugeordnete Spannungselektrode (4) nahezu halbkreisförmig umlaufen.

3. Leitfähigkeitssensor nach Anspruch 2, **dadurch gekennzeichnet, dass** die Spannungselektroden (3) auf einem Durchmesser (d) der Stirnwandung (2) und die halbkreisförmig verlaufenden Stromelektroden (4) auf demselben Durchmesser (d) spiegelsymrnetrisch zueinander und zu sich liegen.

4. Leitfähigkeitssensor nach Anspruch 1, **dadurch gekennzeichnet, dass** von vier oder sechs der im Wesentlichen kreisflächenförmigen Stromelektroden (4) jeweils zwei bzw. drei in einer Halbkreisanordnung um jeweils eine von zwei der Spannungselektroden (3) und diese in einem lichten Abstand (a) voneinander angeordnet sind.

5. Leitfähigkeitssensor nach Anspruch 4, **dadurch gekennzeichnet, dass** die im Wesentlichen kreisflächenförmigen Spannungselektroden (3) auf einem Durchmesser (d) der Stirnwandung (2) und die vier bzw. sechs Stromelektroden (4) auf bzw. spiegelsymmetrisch zu diesem Durchmesser (d) liegen.

6. Leitfähigkeitssensor nach einem der vorhergehenden Ansprüche, **dadurch gekennzeichnet, dass** ein Temperatursensor in einer der Spannungselektroden (3) oder Stromelektroden (4) eingebaut ist.

7. Leitfähigkeitssensor nach einem der vorhergehenden Ansprüche, **dadurch gekennzeichnet, dass** das Gehäuse (1) aus einem isolierenden Kunststoff, wie Polyetheretherketon (PEEK), besteht.

8. Leitfähigkeitssensor nach einem der vorhergehenden Ansprüche, **dadurch gekennzeichnet, dass** die Messelektroden (3, 4) aus Edelstahl oder Tantal bestehen.

9. Leitfähigkeitssensor nach einem der vorhergehenden Ansprüche, **dadurch gekennzeichnet, dass** das Gehäuse (1) in einen 25 mm Stutzen passt.

10. Leitfähigkeitssensor nach einem der vorhergehenden Ansprüche, **gekennzeichnet durch** eine Einbaulänge von weniger als etwa 10 mm.

## Claims

1. A conductivity sensor having a substantially circular-cylindrical housing (1) made of plastic or glass, with a plane, substantially circular end wall (2) and with measuring electrodes (3, 4) made of metal or artificial carbon disposed in the end wall (2), of which at least two that are wired as voltage electrodes (3) and at least two that are wired as current electrodes (4) form poles, the voltage electrodes (3) being substantially circular in form and surrounded by two annular current electrodes (4) each extending substantially in a semicircle or by at least four substantially circular current electrodes (4) disposed in two semicircles.

2. A conductivity sensor according to Claim 1, **characterized in that** two of the voltage electrodes (3) are disposed at a clear distance (a) from one another, **in that** one of the current electrodes (4) is associated in each case with one of the two voltage electrodes (3) **and in that** the current electrodes (4) each extend virtually in a semicircle around the associated voltage electrode (3).

3. A conductivity sensor according to Claim 2, **characterized in that** the voltage electrodes (3) are located on a diameter (d) of the end wall (2) and the current electrodes (4), extending in the form of a semicircle, are disposed on the same diameter (d) so as to be mirror-symmetrical relative to one another and in respect of said diameter (d).

4. A conductivity sensor according to Claim 1, **characterized in that** of four or six of the substantially circular current electrodes (4) two or three respectively are disposed in a semicircular arrangement in each case around one of two voltage electrodes (3) and the latter are disposed at a clear distance (a) from one another.

5. A conductivity sensor according to Claim 4, **characterized in that** the substantially circular voltage electrodes (3) are located on a diameter (d) of the end wall (2) and the four or six current electrodes (4) are located on this diameter (d) or disposed so as to be mirror-symmetrical relative to this diameter (d).

6. A conductivity sensor according to one of the preceding claims, **characterized in that** a temperature sensor is built into one of the voltage electrodes (3) or current electrodes (4).

7. A conductivity sensor according to one of the preceding claims, **characterized in that** the housing (1) is made of an insulating plastic, such as polyetheretherketone (PEEK).

8. A conductivity sensor according to one of the preceding claims, **characterized in that** the measuring electrodes (3, 4) are made of high-grade steel or tantalum.

9. A conductivity sensor according to one of the preceding claims, **characterized in that** the housing (1) fits into a 25 mm socket.

10. A conductivity sensor according to one of the preceding claims, **characterized by** an installed length of less than approximately 10 mm.

## Revendications

1. Capteur de conductivité avec un boîtier (1) ayant essentiellement la forme d'un cylindre circulaire réalisé en matière plastique ou en verre, avec une paroi frontale (2) plane essentiellement circulaire et avec dans la paroi frontale (2) des électrodes de mesure (3, 4) en métal ou en charbon synthétique dont au moins deux, raccordés en tant qu'électrodes de tension (3), forment des pôles et au moins deux, raccordés en tant qu'électrodes de courant (4), forment des pôles, les électrodes de tension (3) ayant essentiellement la forme d'une surface circulaire et étant entourées par deux électrodes de courant (4) ayant la forme de couronne circulaire, s'étendant chacune essentiellement dans un demi-cercle ou étant entourées par au moins quatre électrodes de courant (4) ayant essentiellement la forme d'une surface circulaire et disposées en deux demi-cercles.

2. Capteur de conductivité selon la revendication 1, **caractérisé en ce que** deux des électrodes de tension (4) présentent un écartement (a) l'une par rapport à l'autre, **en ce que** dans chaque cas une des deux électrodes de tension (3) est associée à une des électrodes de courant (4), et **en ce que** les électrodes de courant (4) entourent l'électrode de tension (3) qui leur est associée en formant à peu près un demi-cercle.

3. Capteur de conductivité selon la revendication 2, **caractérisé en ce que** les électrodes de tension (3) sont placées sur un diamètre (d) de la paroi frontale (2) et **en ce que** les électrodes de courant (4) s'étendant en demi-cercle sont placées sur le même diamètre (d) et présentant une symétrie de miroir les unes par rapport aux autres et par rapport à elles-mêmes.

4. Capteur de conductivité selon la revendication 1, **caractérisé en ce que** sur les quatre ou six électrodes de courant (4) ayant essentiellement la forme d'une surface circulaire, à chaque fois deux ou trois respectivement sont disposées sur un demi-cercle à chaque fois autour d'une des deux électrodes de tension (3), et celles-ci présentent une écartement (a) l'une par rapport à l'autre.

5. Capteur de conductivité selon la revendication 4, **caractérisé en ce que** les électrodes de tension (3) ayant essentiellement la forme d'une surface circulaire sont disposées sur un diamètre (d) de la paroi frontale (2) et les quatre ou six électrodes de tension (4) sont placées sur ce diamètre (d) ou placées symétriquement par rapport à ce diamètre (d) respectivement.

6. Capteur de conductivité selon l'une des revendications précédentes, **caractérisé en ce qu'**un capteur de température est monté dans une des électrodes de tension (3) ou une des électrodes de courant (4).

7. Capteur de conductivité selon l'une des revendications précédentes, **caractérisé en ce que** le boîtier (1) est composé d'une matière plastique isolante, telle que de la polyéther éther cétone (PEEK).

8. Capteur de conductivité selon l'une des revendications précédentes, **caractérisé en ce que** les électrodes de mesure (3, 4) sont en acier spécial ou en tantale.

9. Capteur de conductivité selon l'une des revendications précédentes, **caractérisé en ce que** le boîtier (1 ) tient dans un raccord de 25 mm.

10. Capteur de conductivité selon l'une des revendications précédentes, **caractérisé par** une longueur à l'état monté inférieure à environ 10 mm.
